(19) Europäisches Patentamt
European Patent Office
Office européen des brevets

(11) **EP 4 455 758 A1**

(12) **EUROPEAN PATENT APPLICATION**
published in accordance with Art. 153(4) EPC

(43) Date of publication:
**30.10.2024 Bulletin 2024/44**

(21) Application number: **21969003.9**

(22) Date of filing: **23.12.2021**

(51) International Patent Classification (IPC):
*G02B 26/10* (2006.01)   *G01S 7/481* (2006.01)
*G01S 17/02* (2020.01)   *G02B 26/08* (2006.01)

(52) Cooperative Patent Classification (CPC):
**G01S 7/481; G01S 17/02; G02B 26/08; G02B 26/10**

(86) International application number:
**PCT/JP2021/047926**

(87) International publication number:
**WO 2023/119568 (29.06.2023 Gazette 2023/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Pioneer Corporation**
  **Tokyo 113-0021 (JP)**

• **Pioneer Smart Sensing Innovations Corporation**
  **Tokyo 113-0021 (JP)**

(72) Inventors:
• **KUROKI Eiji**
  **Kawagoe-shi, Saitama 350-8555 (JP)**
• **KOYANAGI Hajime**
  **Kawagoe-shi, Saitama 350-8555 (JP)**

(74) Representative: **Vossius & Partner**
**Patentanwälte Rechtsanwälte mbB**
**Siebertstrasse 3**
**81675 München (DE)**

(54) **OPTICAL DEVICE AND SENSOR DEVICE**

(57)    An optical device (10) of the present invention includes a movable reflection body (210), a first light-emitting element (300) attached to the movable reflection body (210), an aperture (112) through which at least a portion of light (L) emitted from the first light-emitting element (300) passes, and a first light-receiving element (400) that receives passing light (PL) having passed through the aperture (112).

FIG. 7

## Description

TECHNICAL FIELD

The present invention relates to an optical device and a sensor device.

BACKGROUND ART

In recent years, various optical devices such as light detection and ranging (LiDAR) have been developed. The optical device may have a micro-electro mechanical system (MEMS) mirror that reflects light emitted from a light-emitting element such as a laser diode (LD). For example, as described in Patent Document 1, the MEMS mirror may be provided with a piezo-resistance element that detects a swing of the MEMS mirror.

RELATED DOCUMENT

PATENT DOCUMENT

[Patent Document 1] Japanese Unexamined Patent Publication No. 2014-56211

SUMMARY OF THE INVENTION

TECHNICAL PROBLEM

The present inventors have studied to attach a light-emitting element to a movable reflection body instead of a piezo-resistance element or in addition to the piezo-resistance element in order to detect a swing of a movable reflection body such as a MEMS mirror. In this optical device, the swing of the movable reflection body is detected by allowing a light-receiving element such as a four-segment photodiode (PD) to receive light emitted from a light-emitting element. However, in this optical device, the light-receiving element may be irradiated with light different from the light emitted from the light-emitting element, such as external light. Therefore, there is room for improvement in the accuracy of detection of the swing of the movable reflection body.

One example of problems to be solved by the present invention may be to accurately detect a swing of a movable reflection body.

SOLUTION TO PROBLEM

The invention as described in Claim 1 is an optical device including:

a movable reflection body,
a first light-emitting element attached to the movable reflection body,
an aperture through which at least a portion of light emitted from the first light-emitting element passes, and

a first light-receiving element that receives the light having passed through the aperture.

The invention as described in Claim 6 is a sensor device including:

the optical device,
a second light-emitting element,
a second light-receiving element that receives light emitted from the second light-emitting element, reflected by the movable reflection body, and reflected or scattered by an object present outside the optical device.

BRIEF DESCRIPTION OF THE DRAWINGS

Fig. 1 is a perspective view of an optical device according to an embodiment.
Fig. 2 is an exploded perspective view of the optical device according to the embodiment.
Fig. 3 is a cross-sectional view taken along line A-A of Fig. 1.
Fig. 4 is a cross-sectional view taken along line B-B of Fig. 1.
Fig. 5 is a cross-sectional view taken along line C-C in Fig. 1.
Fig. 6 is a view for describing an example of an operation of the optical device according to the embodiment.
Fig. 7 is a view for describing an example of the operation of the optical device according to the embodiment.
Fig. 8 is a view showing a configuration of a sensor device according to Examples.

DESCRIPTION OF EMBODIMENTS

Hereinafter, embodiments and Examples of the present invention will be described with reference to the drawings. In all drawings, the same constituent components are denoted by the same reference signs, and detailed explanation thereof will not be repeated.

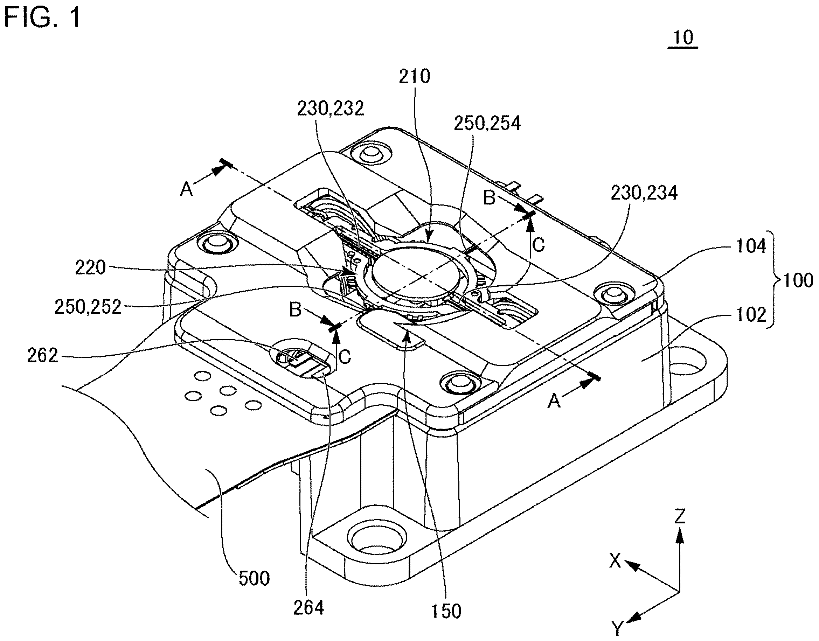

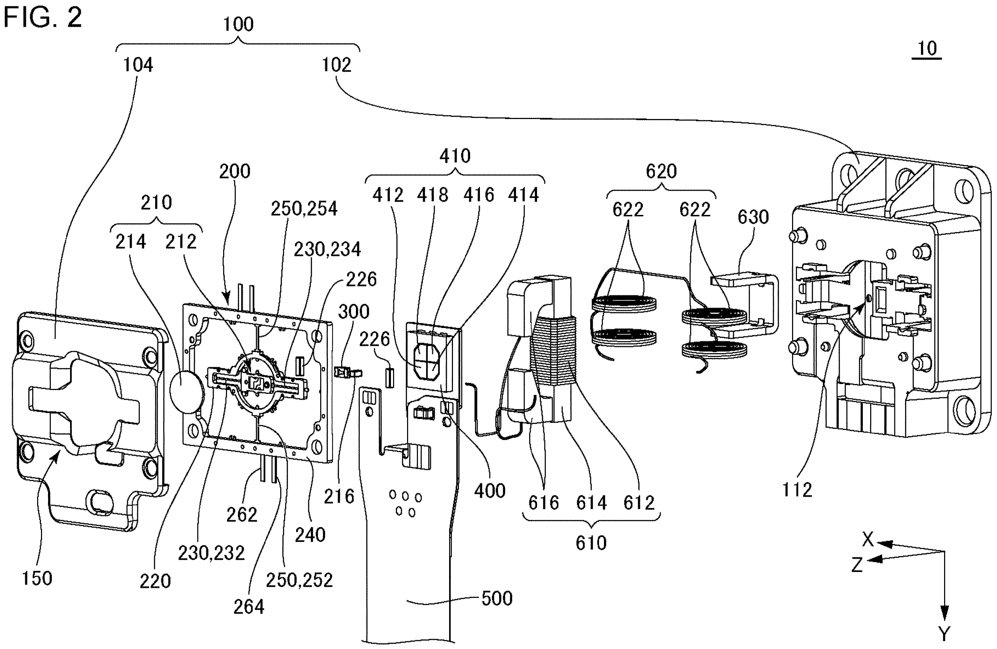

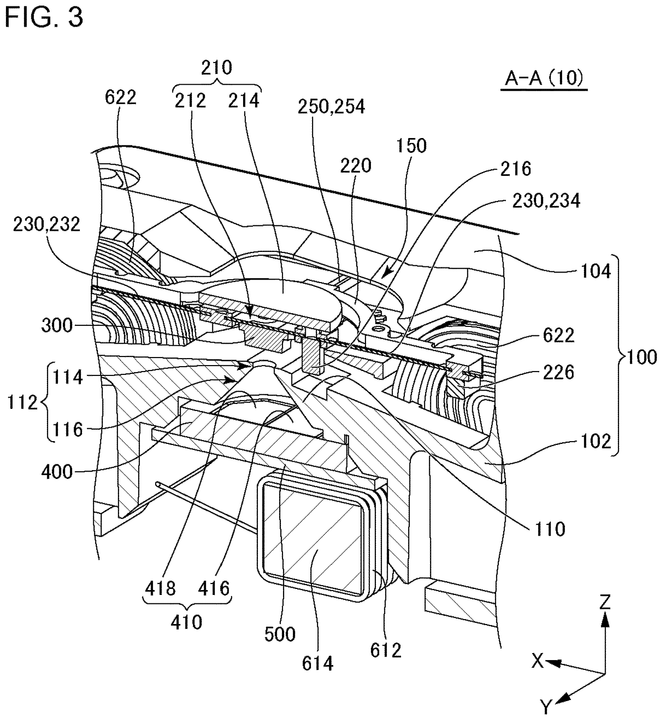

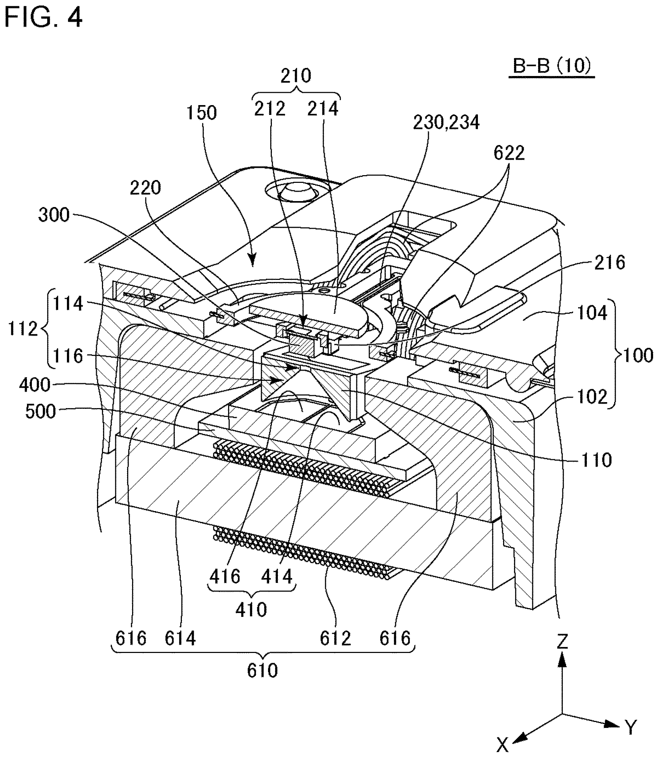

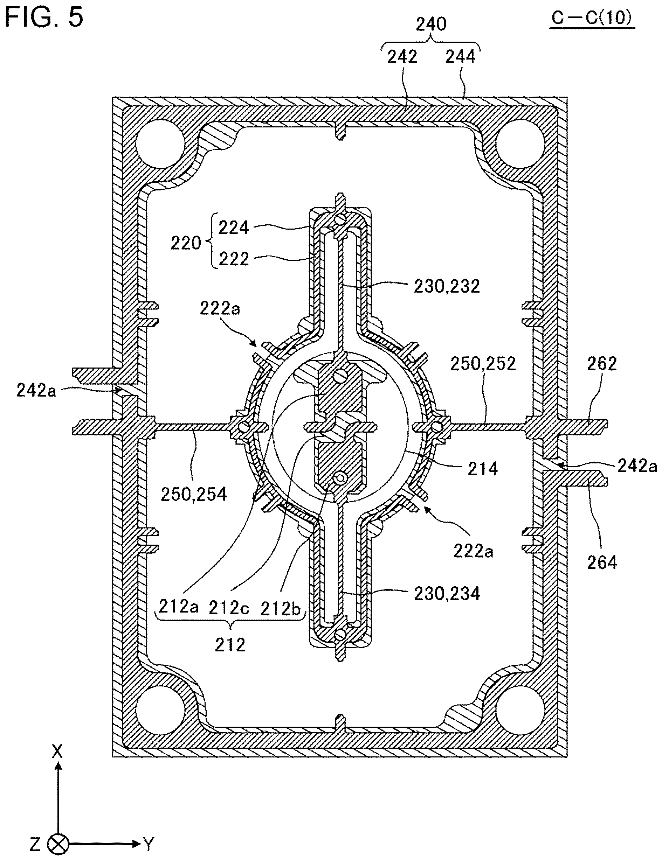

Fig. 1 is a perspective view of an optical device 10 according to an embodiment. Fig. 2 is an exploded perspective view of the optical device 10 according to the embodiment. Fig. 3 is a cross-sectional view taken along line A-A of Fig. 1. Fig. 4 is a cross-sectional view taken along line B-B of Fig. 1. Fig. 5 is a cross-sectional view taken along line C-C in Fig. 1.

In Figs. 1 to 5, an arrow indicating a first direction X, a second direction Y, or a third direction Z indicates that a direction from a proximal end toward a distal end of the arrow is a positive direction in the direction indicated by the arrow, and that a direction from the distal end toward the proximal end of the arrow is a negative direction in the direction indicated by the arrow. In Fig. 5, an X-marked circle indicating the third direction Z indicates that a direction from the foreground to the background of a paper plane is a positive direction in the third direction Z and that a direction from the background to the foreground of the paper plane is a negative direction in the third direction Z. The first direction X, the second direction Y, and the third direction Z are orthogonal to each other.

As shown in Figs. 1 to 4, the optical device 10 includes a housing body 100, an optical scanning device 200, a first light-emitting element 300, a first light-receiving element 400, a flexible substrate 500, a first magnetic circuit 610, a second magnetic circuit 620, and a heat sink 630. As shown in Figs. 1 to 4, the housing body 100 has a base 102 and a lid 104. As shown in Figs. 1 to 5, the optical scanning device 200 includes a movable reflection body 210, a first frame body 220, a pair of first torsion bars 230, a second frame body 240, a pair of second torsion bars 250, a first terminal 262, and a second terminal 264. The pair of first torsion bars 230 include a first metal bar 232 and a second metal bar 234. The pair of second torsion bars 250 includes a third metal bar 252 and a fourth metal bar 254.

In Figs. 1 to 5, the positive direction in the first direction X is a direction from a side where the second metal bar 234 is positioned toward a side where the first metal bar 232 is positioned. The negative direction in the first direction X is a direction from the side where the first metal bar 232 is positioned toward the side where the second metal bar 234 is positioned. The positive direction in the second direction Y is a direction from a side where the fourth metal bar 254 is positioned toward a side where the third metal bar 252 is positioned. The negative direction in the second direction Y is a direction from the side where the third metal bar 252 is positioned toward the side where the fourth metal bar 254 is positioned. The positive direction in the third direction Z is a direction from a side where the base 102 is positioned toward a side where the lid 104 is positioned. The negative direction in the third direction Z is a direction from the side where the lid 104 is positioned toward the side where the base 102 is positioned.

The housing body 100 houses the optical scanning device 200, the first light-emitting element 300, the first light-receiving element 400, at least a portion of the flexible substrate 500, the first magnetic circuit 610, the second magnetic circuit 620, and the heat sink 630. The lid 104 is attached onto a surface of the base 102 on the positive direction side in the third direction Z.

As shown in Figs. 1, 3, and 4, in the optical scanning device 200, at least a portion of the movable reflection body 210, at least a portion of the first frame body 220, and at least a portion of the pair of first torsion bars 230 are mounted on a surface side of the base 102 in the positive direction in the third direction Z in a state of being exposed from the opening 150 of the lid 104. In addition, at least a portion of the second frame body 240 and at least a portion of the pair of second torsion bars 250 are covered with the lid 104, as viewed from the positive direction in the third direction Z. Therefore, it is possible to make it difficult for the first light-receiving element 400 to be irradiated with external light, as compared with a case where at least a portion of the second frame body 240 and at least a portion of the pair of second torsion bars 250 are exposed from the lid 104, as viewed from the third direction Z. In addition, the reflected light from the second torsion bar 250 can be suppressed from returning to the light-receiving element for distance measurement, provided outside the optical scanning device 200, even in a case where a metal portion with a relatively high reflectance of the second torsion bar 250 is irradiated with diffusely reflected light from the outside of the optical scanning device 200 inside the housing body 100, as compared with a case where at least a portion of the pair of second torsion bars 250 is exposed from the lid 104.

As shown in Figs. 3 and 4, the movable reflection body 210 has a movable support table 212 and a reflection body 214. As shown in Fig. 5, the movable support table 212 includes a first metal body 212a, a second metal body 212b, and a resin part 212c. At least a portion of the first metal body 212a is positioned on the positive direction side in the first direction X with respect to at least a portion of the second metal body 212b. At least a portion of the second metal body 212b is positioned on the negative direction side in the first direction X with respect to at least a portion of the first metal body 212a. The resin part 212c covers at least a portion of a surface of the first metal body 212a on the positive direction side in the third direction Z and at least a portion of a surface of the second metal body 212b on the positive direction side in the third direction Z. The reflection body 214 is positioned on a surface side of the resin part 212c in the positive direction in the third direction Z. The surface of the reflection body 214 on the positive direction side in the third direction Z is a reflection surface that reflects light from the outside of the optical scanning device 200, such as distance measurement light. The reflection body 214 is swingable together with the movable support table 212.

As shown in Fig. 5, the first frame body 220 includes a first metal frame body 222 and a first resin body 224. The first metal frame body 222 is positioned in at least a portion of a region surrounding the movable reflection body 210 and the pair of first torsion bars 230, as viewed from the third direction Z. At least a portion of the first metal frame body 222 is sealed by the first resin body 224. In a case where the first resin body 224 is provided, an unnecessary vibration of the first frame body 220 can be suppressed, as compared to a case where the first resin body 224 is not provided.

The first metal bar 232 connects the movable reflection body 210 and the first frame body 220. In addition, the first metal bar 232 extends parallel to the first direction X. Specifically, as shown in Fig. 5, an end of the first metal bar 232 on the negative direction side in the first direction X is connected to the first metal body 212a.

An end of the first metal bar 232 on the positive direction side in the first direction X is connected to an inner edge of the end of the first metal frame body 222 on the positive direction side in the first direction X.

The second metal bar 234 connects the movable reflection body 210 and the first frame body 220. In addition, the second metal bar 234 extends parallel to the first direction X. Specifically, as shown in Fig. 5, an end of the second metal bar 234 on the positive direction side in the first direction X is connected to the second metal body 212b. An end of the second metal bar 234 on the negative direction side in the first direction X is connected to an inner edge of the end of the first metal frame body 222 on the negative direction side in the first direction X.

As shown in Figs. 2, 3, and 4, a first permanent magnet 216 is provided on a surface side of the movable reflection body 210 in the negative direction in the third direction Z. In the examples shown in Figs. 2, 3, and 4, the first permanent magnet 216 is positioned on the negative direction side in the first direction X with respect to the center of the movable reflection body 210 in the first direction X. The movable reflection body 210 swings with respect to the first frame body 220 using the pair of first torsion bars 230 as a rotation axis by allowing the first permanent magnet 216 to receive a magnetic flux generated from the first magnetic circuit 610.

Specifically, as shown in Figs. 2, 3, and 4, the first magnetic circuit 610 includes a first coil 612, a first yoke 614, and a pair of second yokes 616. The first coil 612 is wound around the first yoke 614. As shown in Figs. 3 and 4, the first yoke 614 extends parallel to the second direction Y in the space on the negative direction side in the third direction Z with respect to the first light-emitting element 300 and the flexible substrate 500. Each of the pair of second yokes 616 is connected to each of an end of the first yoke 614 on the positive direction side in the second direction Y and an end of the first yoke 614 on the negative direction side in the second direction Y. As shown in Fig. 4, each tip of the pair of second yokes 616 faces each other through a space positioned on the negative direction side in the third direction Z with respect to the movable reflection body 210. By allowing an alternating current to flow through the first coil 612, an alternating current magnetic field is generated from each tip of the pair of second yokes 616. The movable reflection body 210 swings with respect to the first frame body 220 using the pair of first torsion bars 230 as a rotation axis by allowing the first permanent magnet 216 to receive the alternating current magnetic field.

As shown in Fig. 5, the second frame body 240 includes a second metal frame body 242 and a second resin body 244. The second metal frame body 242 is positioned in at least a portion of a region surrounding the first frame body 220 and the pair of second torsion bars 250, as viewed from the third direction Z. At least a portion of the second metal frame body 242 is sealed by the second resin body 244. In a case where the second resin body 244 is provided, an unnecessary vibration of the second frame body 240 can be suppressed, as compared to a case where the second resin body 244 is not provided.

The third metal bar 252 connects the first frame body 220 and the second frame body 240. In addition, the third metal bar 252 extends parallel to the second direction Y. Specifically, as shown in Fig. 5, an end of the third metal bar 252 on the negative direction side in the second direction Y is connected to the part of the outer edge of the first metal frame body 222 that corresponds to the positive side of the second direction Y and the center of the first direction X. An end of the third metal bar 252 on the positive direction side in the second direction Y is connected to the part of the inner edge of the second metal frame body 242 that corresponds to the positive side of the second direction Y and the center of the first direction X.

The fourth metal bar 254 connects the first frame body 220 and the second frame body 240. In addition, the fourth metal bar 254 extends parallel to the second direction Y. Specifically, as shown in Fig. 5, an end of the fourth metal bar 254 on the positive direction side in the second direction Y connected to the part of the outer edge of the first metal frame body 222 that corresponds to the negative side of the second direction Y and the center of the first direction X. An end of the fourth metal bar 254 on the negative direction side in the second direction Y is connected to the part of the inner edge of the second metal frame body 242 that corresponds to the negative side of the second direction Y and the center of the first direction X.

As shown in Figs. 2 and 3, each of the pair of second permanent magnets 226 is provided at each of both ends of the first frame body 220 in the first direction X. In the examples shown in Figs. 2 and 3, each of the second permanent magnets 226 is provided on a surface side of the first frame body 220 in the negative direction in the third direction Z. The first frame body 220 swings with respect to the second frame body 240 using the pair of second torsion bars 250 as a rotation axis by allowing each of the pair of second permanent magnets 226 to receive a magnetic flux generated from the second magnetic circuit 620. Thus, the movable reflection body 210 is integrated with the first frame body 220 and the pair of first torsion bars 230 to swing with respect to the second frame body 240 using the second torsion bar 250 as a rotation axis.

Specifically, as shown in Fig. 2, the second magnetic circuit 620 includes one pair of second coils 622 positioned on the positive direction side in the first direction X and the other pair of second coils 622 positioned on the negative direction side in the first direction X. The pair of second coils 622 positioned on the positive direction side in the first direction X face each other through the end part of the first frame body 220 on the positive direction side in the first direction X. By allowing an alternating current to flow through the pair of second coils 622, an alternating current magnetic field is generated from the pair of second coils 622. In addition, the other pair of second coils 622 positioned on the negative direction side in the first direction X face each other through the end part of the movable reflection body 210 on the negative direction side in the first direction X. By allowing an alternating current to flow through the pair of second coils 622, an alternating current magnetic field is generated from the other pair of second coils 622. The first frame body 220 swings with respect to the second frame body 240 using the pair of second frame bodies 240 as a rotation axis by allowing the second permanent magnet 226 provided at each of both ends of the first frame body 220 in the first direction X to receive the alternating magnetic field. Thus, the movable reflection body 210 is integrated with the first frame body 220 and the pair of first torsion bars 230 to swing with respect to the second frame body 240 using the second torsion bar 250 as a rotation axis.

In an embodiment, at least a portion of each of the four second coils 622 is covered with the lid 104, as viewed from the positive direction in the third direction Z. Accordingly, the reflected light from the second coil 622 can be suppressed from returning to the light-receiving element for distance measurement, provided outside the optical scanning device 200, even in a case where a metal portion with a relatively high reflectance of the second coil 622 is irradiated with diffusely reflected light from the outside of the optical scanning device 200 inside the housing body 100, as compared with a case where at least a portion of each second coil 622 is exposed from the lid 104. In addition, the lid 104 covers a metal portion with a relatively high reflectance, such as a wiring that connects the flexible substrate 500 and the first coil 612, a soldering portion between the wiring and the flexible substrate 500, a wiring that connects the flexible substrate 500 and the second coil 622, and a soldering portion between the wiring and the flexible substrate 500, as viewed from the positive direction in the third direction Z. Accordingly, the reflected light from the metal portion can be suppressed from returning to the light-receiving element for distance measurement, provided outside the optical scanning device 200, even in a case where the metal portion is irradiated with the diffusely reflected light, as compared with a case where the metal portion is not covered with the lid 104.

Furthermore, heat generated from the second magnetic circuit 620 is transferred to the heat sink 630 through a heat transfer agent which is not shown in the drawing. Thus, the heat generated from the second magnetic circuit 620 can be released to the outside of the optical device 10.

The first terminal 262 and the second terminal 264 are connected to the second metal frame body 242. Specifically, as shown in Fig. 5, the first terminal 262 is connected to the part of the outer edge of the second metal frame body 242 that corresponds to the positive side of the second direction Y and the center of the first direction X. The second terminal 264 is connected to the part of the outer edge of the second metal frame body 242 that corresponds to the positive side of the second direction Y and the part shifted to the positive direction side in the second direction Y from center of the first direction X. It should be noted that a position where the first terminal 262 and the second terminal 264 are provided is not limited to this example. In an embodiment, the first terminal 262 and the second terminal 264 are pressed against the flexible substrate 500 by the lid 104. Accordingly, it is easier to ensure continuity between the first terminal 262 and the flexible substrate 500, and a conduction between the second terminal 264 and the flexible substrate 500, as compared with a case where the first terminal 262 and the second terminal 264 are not pressed against the flexible substrate 500 by the lid 104.

The first light-emitting element 300 is, for example, a light-emitting diode (LED). The first light-emitting element 300 is attached onto the negative direction side in the third direction Z of the movable support table 212. Accordingly, the first light-emitting element 300 is swingable together with the movable reflection body 210.

One of the anode and the cathode of the first light-emitting element 300 is electrically connected to the first metal body 212a. The other of the anode and the cathode of the first light-emitting element 300 is electrically connected to the second metal body 212b. In an embodiment, the drive current of the first light-emitting element 300 can flow between the first terminal 262 and the second terminal 264.

Specifically, as shown in Fig. 5, the first metal frame body 222 is provided with two first split parts 222a. One of the two first split parts 222a is provided between a connection part between the first metal frame body 222 and the first metal bar 232, and a connection part between the first metal frame body 222 and the fourth metal bar 254. The other of the two first split parts 222a is provided between a connection part between the first metal frame body 222 and the second metal bar 234, and a connection part between the first metal frame body 222 and the third metal bar 252. Thus, an occurrence of a short circuit between the first metal body 212a and the second metal body 212b through the first metal frame body 222 is prevented. In addition, an occurrence of a short circuit between the third metal bar 252 and the fourth metal bar 254 through the first metal frame body 222 is prevented.

In addition, as shown in Fig. 5, the second metal frame body 242 includes a second split part 242a on the positive direction side in the second direction Y of the second metal frame body 242, and another second split part 242a on the negative direction side in the second direction Y of the second metal frame body 242. The second split part 242a on the positive direction side in the second direction Y of the second metal frame body 242 is provided in a portion of the second metal frame body 242 which is corresponds to the positive side of the second direction Y and the part shifted to the negative direction side in the first direction X from the center part in the first direction X. In the example shown in Fig. 5, the second split part 242a on the positive direction side in the second direction Y of the second metal frame body 242 is positioned between a connection part between the second metal frame body 242 and the first terminal 262, and a connection part between the second metal frame body 242 and the second terminal 264. The other second split part 242a on the negative direction side in the second direction Y of the second metal frame body 242 is provided in a portion of the second metal frame body 242 which is corresponds to the negative side of the second direction Y and the part shifted to the positive direction side in the first direction X from the center part in the first direction X. These two second split parts 242a prevent an occurrence of a short circuit between the first terminal 262 and the second terminal 264 through the second metal frame body 242.

In an embodiment, the drive current of the first light-emitting element 300 can flow from the first terminal 262 to the second terminal 264, through the third metal bar 252, a portion between a connection part between the first metal frame body 222 and the third metal bar 252, and a connection part between the first metal frame body 222 and the first metal bar 232 in the first metal frame body 222; a portion between a connection part between the first metal frame body 222 and the second metal bar 234, and a connection part between the first metal frame body 222 and the fourth metal bar 254 in the first metal bar 232, the first metal body 212a, the first light-emitting element 300, the second metal body 212b, the second metal bar 234, and the first metal frame body 222; and a portion between a connection part between the second metal frame body 242 and the fourth metal bar 254, and a connection part between the second metal frame body 242 and the second terminal 264 in the fourth metal bar 254 and the fourth metal frame body 242. In this example, the drive current flows from the first terminal 262 to the second terminal 264. However, the drive current may flow from the second terminal 264 to the first terminal 262.

As shown in Figs. 3 and 4, the first light-receiving element 400 is positioned on the negative direction side in the third direction Z with respect to the first light-emitting element 300. At least a portion of the light-shielding body 110 of the base 102 is positioned between the first light-emitting element 300 and the first light-receiving element 400 in the third direction Z. The light-shielding body 110 defines an aperture 112. At least a portion of light emitted from the first light-emitting element 300 passes through the aperture 112. The first light-receiving element 400 receives light having passed through the aperture 112.

In the examples shown in Figs. 3 and 4, the aperture 112 includes a narrow hole 114 and a wide hole 116. The narrow hole 114 penetrates a surface of the light-shielding body 110 on the positive direction side in the third direction Z. The inner surface of the narrow hole 114 is substantially parallel to the third direction Z. Thus, the opening area of the narrow hole 114, which is perpendicular to the third direction Z, is constant regardless of the position in the third direction Z. The wide hole 116 penetrates a surface of the light-shielding body 110 on the negative direction side in the third direction Z. An end of the wide hole 116 on the positive direction side in the third direction Z communicates with an end of the narrow hole 114 on the negative direction side in the third direction Z. The opening area of the wide hole 116, which is perpendicular to the third direction Z, is larger than the opening area of the narrow hole 114, which is perpendicular to the third direction Z. Specifically, in the examples shown in Figs. 3 and 4, the inner surface of the wide hole 116 is a surface inclined with respect to the third direction Z. Thus, the opening area of the wide hole 116, which is perpendicular to the third direction Z, increases from the positive direction to the negative direction in the third direction Z. It should be noted that the shape of the aperture 112 is not limited to the examples shown in Figs. 3 and 4. For example, the inner surface of the wide hole 116 may be substantially parallel to the third direction Z. In this case, the opening area of the wide hole 116, which is perpendicular to the third direction Z, is constant regardless of the position in the third direction Z.

The first light-receiving element 400 is, for example, a four-segment PD (photodiode). As shown in Figs. 2, 3, and 4, a surface of the first light-receiving element 400 on the positive direction side in the third direction Z has a light-receiving area 410. The light-receiving area 410 includes a first light-receiving area 412, a second light-receiving area 414, a third light-receiving area 416, and a fourth light-receiving area 418. The first light-receiving area 412, the second light-receiving area 414, the third light-receiving area 416, and the fourth light-receiving area 418 are segmented from each other. Specifically, the first light-receiving area 412 is positioned on the positive direction side in the first direction X and on the positive direction side in the second direction Y with respect to the center of the light-receiving area 410 in the first direction X and the second direction Y. The second light-receiving area 414 is positioned on the negative direction side in the first direction X and on the positive direction side in the second direction Y with respect to the center of the light-receiving area 410 in the first direction X and the second direction Y. The third light-receiving area 416 is positioned on the negative direction side in the first direction X and on the negative direction side in the second direction Y with respect to the center of the light-receiving area 410 in the first direction X and the second direction Y. The fourth light-receiving area 418 is positioned on the positive direction side in the first direction X and the negative direction side in the second direction Y with respect to the center of the light-receiving area 410 in the first direction X and the second direction Y.

The flexible substrate 500 is, for example, a flexible printed circuit (FPC). The flexible substrate 500 is electrically connected to the first light-receiving element 400. The flexible substrate 500 is provided to transmit a signal generated in the first light-receiving element 400 by allowing the first light-receiving element 400 to receive light. The flexible substrate 500 is pulled out from the housing body 100 toward the negative direction side in the second direction Y.

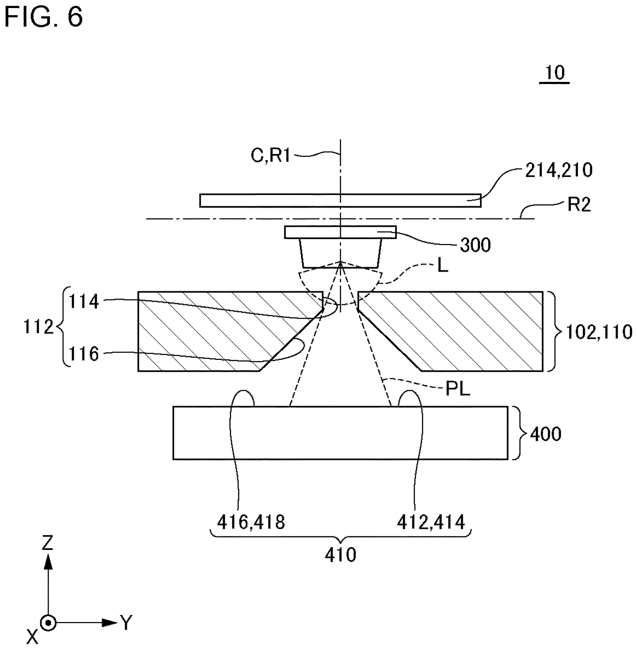

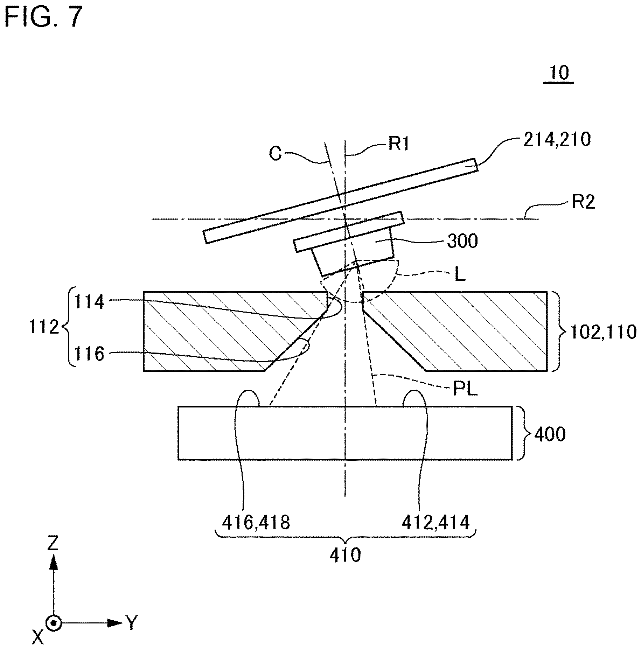

Figs. 6 and 7 are each a view for describing an example of an operation of the optical device 10 according to an embodiment. In Figs. 6 and 7, a white circle with a black dot indicating the first direction X shows that a direction from a back side toward a front side of a paper surface is the positive direction in the first direction X and a direction from the front side toward the back side of the paper surface is the negative direction in the first direction X. In addition, in Figs. 6 and 7, only the reflection body 214 out of the movable support table 212 and the reflection body 214 of the movable reflection body 210 is shown for the sake of description.

In Figs. 6 and 7, the first reference line R1, the second reference line R2, and the center line C are virtually shown for the sake of description. The first reference line R1 passes through the center of the swing of the movable reflection body 210 around the pair of first torsion bars 230 in parallel with the third direction Z, as viewed from the positive direction in the first direction X. The second reference line R2 passes through the center of the swing of the movable reflection body 210 around the pair of first torsion bars 230 in parallel with the second direction Y, as viewed from the positive direction in the first direction X. The center line C passes through the center of the movable reflection body 210 in the direction perpendicular to a surface of the reflection body 214 on the positive direction side in the third direction Z, as viewed from the positive direction in the first direction X.

In the examples shown in Figs. 6 and 7, the first reference line R1 passes through the center of the aperture 112 in the first direction X and the second direction Y and the center of the light-receiving area 410 in the first direction X and the second direction Y. In addition, in the examples shown in Figs. 6 and 7, a light-emitting point at which light L is emitted from the first light-emitting element 300, as viewed from the positive direction in the first direction X, is shifted to a side where the first light-emitting element 300 is positioned along the center line C with respect to the center of a swing of the movable reflection body 210 around the pair of first torsion bars 230.

The state shown in Fig. 6 will be described. In the state shown in Fig. 6, a swing angle of the movable reflection body 210 around the pair of first torsion bars 230 is 0°, as viewed from the positive direction in the first direction X. Therefore, the center line C overlaps with the first reference line R1 in the first direction X, as viewed from the positive direction in the first direction X.

The light L spreads toward the periphery of a center line C as a distance from the light-emitting point of the first light-emitting element 300 is increased. The portion irradiated with the light L toward the narrow hole 114 passes through the narrow hole 114 in a direction parallel to the center line C as the passing light PL. On the contrary, the portion irradiated with the light L toward the periphery of the narrow hole 114 is shielded by a peripheral portion of the narrow hole 114 on a surface of the light-shielding body 110 on the positive direction side in the third direction Z.

The passing light PL passes through the narrow hole 114 and then through the wide hole 116. The passing light PL spreads away from the light-emitting point of the first light-emitting element 300. On the other hand, the opening area of the wide hole 116, which is perpendicular to the third direction Z, is larger than the opening area of the narrow hole 114, which is perpendicular to the third direction Z. Therefore, the passing light PL can pass through the wide hole 116 without being shielded by the inner surface of the wide hole 116. The passing light PL passes through the wide hole 116, and then the center of the light-receiving area 410 in the first direction X and the second direction Y, and a periphery of the center are irradiated with the passing light PL.

The state shown in Fig. 7 will be described. In the state shown in Fig. 7, the movable reflection body 210 is in a state of rotating counterclockwise around the pair of first torsion bars 230 with respect to a state where a swing angle around the pair of first torsion bars 230 is 0°, as viewed from the positive direction in the first direction X. Thus, the center line C is in a state of rotating counterclockwise with respect to the first reference line R1, as viewed from the positive direction in the first direction X.

The light L spreads toward the periphery of a center line C as a distance from the light-emitting point of the first light-emitting element 300 is increased. The portion irradiated with the light L toward the narrow hole 114 passes through the narrow hole 114 in a direction inclined with respect to the first reference line R1, as the passing light PL. Specifically, the passing light PL is inclined to a side opposite to the side on which the center line C is inclined with respect to the first reference line R1. On the contrary, the portion irradiated with the light L toward the periphery of the narrow hole 114 is shielded by a peripheral portion of the narrow hole 114 on a surface of the light-shielding body 110 on the positive direction side in the third direction Z.

The passing light PL passes through the narrow hole 114 and then through the wide hole 116. The passing light PL spreads away from the light-emitting point of the first light-emitting element 300. On the other hand, the opening area of the wide hole 116, which is perpendicular to the third direction Z, is larger than the opening area of the narrow hole 114, which is perpendicular to the third direction Z. Therefore, the passing light PL can pass through the wide hole 116 without being shielded by the inner surface of the wide hole 116. The passing light PL passes through the wide hole 116, and then, a position shifted to the negative direction side in the second direction Y with respect to the center of the light-receiving area 410 in the first direction X and the second direction Y, and a periphery of the position are irradiated with the passing light PL.

From the examples shown in Figs. 6 and 7, in a case where a part of the light L passes through the aperture 112, a spot generated in the light-receiving area 410 by the passing light PL moves to a side opposite to the side where the center line C is inclined with respect to the first reference line R1. For example, as shown in Figs. 6 and 7, in a case where the movable reflection body 210 swings around the pair of first torsion bars 230, a spot generated in the light-receiving area 410 by the passing light PL moves to a side opposite to the side where the center line C is inclined with respect to the first reference line R1 in the second direction Y. In addition, in a case where the movable reflection body 210 swings around the pair of second torsion bars 250, a spot generated in the light-receiving area 410 by the passing light PL moves to a side opposite to the side where the center line C is inclined with respect to the first reference line R1 in the first direction X.

In an embodiment, the swing of the movable reflection body 210 can be detected in accordance with a ratio of the intensity of a signal generated in each of the first light-receiving area 412, the second light-receiving area 414, the third light-receiving area 416, and the fourth light-receiving area 418 by the light L. Specifically, the swing angle of the movable reflection body 210 around the pair of second torsion bars 250 is estimated by a first tilt error rate RX represented by Expression (1). In addition, the swing angle of the movable reflection body 210 around the pair of first torsion bars 230 is estimated by a second tilt error rate RY represented by Expression (2).

$$RX = EX/(A + B + C + D) \quad (1)$$

$$RY = EY/(A + B + C + D) \quad (2)$$

$$EX = (A + D) - (B + C) \quad (3)$$

$$EY = (A + B) - (C + D) \quad (4)$$

It should be noted that the first tilt error amount EX is a tilt error amount of the swing of the movable reflection body 210 around the pair of second torsion bars 250. The second tilt error amount EY is a tilt error amount of the swing of the movable reflection body 210 around the pair of first torsion bars 230. A, B, C, and D are each an intensity of a signal generated in each of the first light-receiving area 412, the second light-receiving area 414, the third light-receiving area 416, and the fourth light-receiving area 418 by the passing light PL. The intensities A, B, C, and D are increased as the spot of light with which each of the first light-receiving area 412, the second light-receiving area 414, the third light-receiving area 416, and the fourth light-receiving area 418 is irradiated is larger.

A group of the first light-receiving area 412 and the fourth light-receiving area 418, and a group of the second light-receiving area 414 and the third light-receiving area 416 are segmented in a moving direction of a spot generated in the light-receiving area 410 by the passing light PL in a case where the movable reflection body 210 swings around the pair of second torsion bars 250. By allowing the spot to move in the first direction X, a relationship between the irradiation areas of the spots in the first light-receiving area 412 and the fourth light-receiving area 418 and the irradiation areas of the spots in the second light-receiving area 414 and the third light-receiving area 416 varies. Therefore, the first tilt error rate RX varies depending on the position of the spot in the first direction X in the light-receiving area 410. Therefore, the swing angle of the movable reflection body 210 around the pair of second torsion bars 250 can be estimated from the first tilt error rate RX.

A group of the first light-receiving area 412 and the second light-receiving area 414, and a group of the third light-receiving area 416 and the fourth light-receiving area 418 are segmented in the moving direction of a spot generated in the light-receiving area 410 by the passing light PL in a case where the movable reflection body 210 swings around the pair of first torsion bars 230. By allowing the spot to move in the second direction Y, a relationship between the irradiation areas of the spots in the first light-receiving area 412 and the second light-receiving area 414 and the irradiation areas of the spots in the third light-receiving area 416 and the fourth light-receiving area 418 varies. Therefore, the second tilt error rate RY varies depending on the position of the spot in the second direction Y in the light-receiving area 410. Therefore, the swing angle of the movable reflection body 210 around the pair of first torsion bars 230 can be estimated from the second tilt error rate RY.

In an embodiment, at least a portion of the light L passes through the aperture 112. Accordingly, the irradiation of the light-receiving area 410 with light different from the light L, such as external light, can be suppressed, as compared to a case where the light-shielding body 110 is not provided. Therefore, the swing of the movable reflection body 210 can be accurately detected, as compared with a case where the light-shielding body 110 is not provided.

In addition, in an embodiment, the portion irradiated with the light L toward the periphery of the narrow hole 114 is shielded by a peripheral portion of the narrow hole 114 on a surface of the light-shielding body 110 on the positive direction side in the third direction Z. Therefore, the spot generated in the light-receiving area 410 by the passing light PL can be reduced, as compared to a case where the light-shielding body 110 is not provided. Accordingly, the variation amount in the first tilt error rate RX and the variation amount in the second tilt error rate RY can be increased and the detection sensitivity for the swing of the movable reflection body 210 can be increased, as compared with a case where the light-shielding body 110 is not provided.

In one example, the spot generated in the light-receiving area 410 by the passing light PL may be set to be smaller than the light-receiving area 410, as viewed from the positive direction in the third direction Z. Specifically, the length in the first direction X of the spot generated in the light-receiving area 410 by the passing light PL may be, for example, more than 0.3 times and less than 0.7 times the length of the first direction X of the light-receiving area 410. In a case where the length of the spot is in the numerical range, an variation amount in the first tilt error amount EX can be increased and an SN ratio of the detection of the swing of the movable reflection body 210 around the pair of second torsion bars 250 can be increased, as compared with a case where the length of the spot is equal to or less than the lower limit of the numerical range. In a case where the length of the spot is in the numerical range, an variation amount in the first tilt error rate RX can be increased, and thus, the sensitivity of the detection of the swing of the movable reflection body 210 around the pair of second torsion bars 250 can be increased, as compared with a case where the length of the spot is more than the upper limit of the numerical range. The length in the second first direction Y of the spot generated in the light-receiving area 410 by the passing light PL may be, for example, more than 0.3 times and less than 0.7 times the length of the second direction Y of the light-receiving area 410.

In addition, the amplitude in the first direction X of the spot generated in the light-receiving area 410 by the passing light PL may be, for example, more than 0.05 times and less than 0.1 times the length of the first direction X of the light-receiving area 410. In a case where the amplitude of the spot is in the numerical range, an variation amount in the first tilt error rate RX can be increased, and thus, the sensitivity of the detection of the swing of the movable reflection body 210 around the pair of second torsion bars 250 can be increased, as compared with a case where the amplitude of the spot is equal to or less than the lower limit of the numerical range. In a case where the amplitude of the spot is in the numerical range, at least a portion of the spot can be suppressed from being irradiated the outside in the first direction X of the light-receiving area 410, as compared with a case where the amplitude of the spot is equal to or more than the upper limit of the numerical range. The amplitude of the spot generated in the light-receiving area 410 by the passing light PL in the second direction Y may also be, for example, more than 0.05 times and less than 0.1 times the length of the second direction Y of the light-receiving area 410.

The size and the amplitude of the spot generated in the light-receiving area 410 by the passing light PL can be changed by appropriately adjusting conditions such as an opening area of the narrow hole 114 perpendicular to the third direction Z, a distance between a light-emitting point of the first light-emitting element 300 and an end of the narrow hole 114 on the positive direction side in the third direction Z, a distance between a light-emitting point of the first light-emitting element 300 and the light-receiving area 410 of the first light-receiving element 400, and a distance between a light-emitting point of the first light-emitting element 300 and the center of the swing of the movable reflection body 210.

Furthermore, the entire light L may pass through the aperture 112. Even in this case, in a case where the opening area of the aperture 112 perpendicular to the third direction Z is appropriately set, the light-receiving area 410 can be suppressed from being irradiated with light different from the light L, as compared with a case where the light-shielding body 110 is not provided.

In addition, in an embodiment, an opening area of at least a portion of the aperture 112 on the side where the first light-receiving element 400 is positioned is larger than an opening area of at least a portion of the aperture 112 on the side where the first light-emitting element 300 is positioned. Specifically, on the other hand, the opening area of the wide hole 116, which is perpendicular to the third direction Z, is larger than the opening area of the narrow hole 114, which is perpendicular to the third direction Z. Accordingly, the irradiation area of the passing light PL of the light-receiving area 410 can be increased, as compared to a case where the opening area of the wide hole 116, which is perpendicular to the third direction Z, is equal to or less than the opening area of the narrow hole 114, which is perpendicular to the third direction Z. In addition, the strength of the light-shielding body 110 can be increased, as compared with a case where the peripheral portion of the wide hole 116 of the light-shielding body 110 is not present.

Furthermore, in the examples shown in Figs. 6 and 7, the inner surface of the wide hole 116 is a surface inclined with respect to the third direction Z. However, the inner surface of the wide hole 116 may be substantially parallel to the third direction Z. Also in this example, the irradiation area of the passing light PL of the light-receiving area 410 can be increased, as compared to a case where the opening area of the wide hole 116, which is perpendicular to the third direction Z, is equal to or less than the opening area of the narrow hole 114, which is perpendicular to the third direction Z. In addition, the strength of the light-shielding body 110 can be increased, as compared with a case where the peripheral portion of the wide hole 116 of the light-shielding body 110 is not present.

Examples

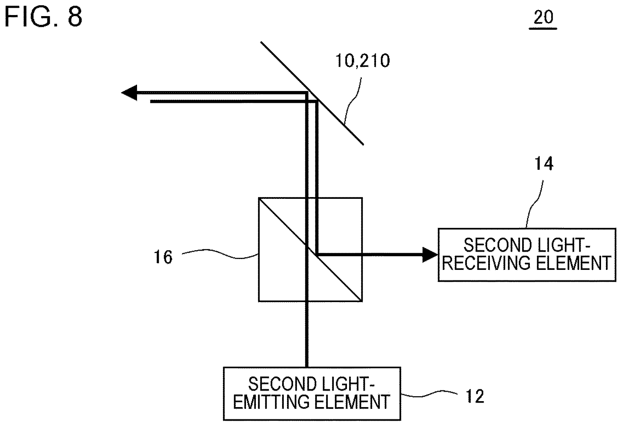

Fig. 8 is a view showing a configuration of a sensor device 20 according to Examples.

The sensor device 20 includes an optical device 10 according to the embodiment. The sensor device 20 further includes a second light-emitting element 12, a second light-receiving element 14, and a beam splitter 16. In Examples, the sensor device 20 is a light detection and ranging (LiDAR).

The second light-emitting element 12 is, for example, a laser diode (LD). As indicated by a solid-line arrow extending from the second light-emitting element 12 through the beam splitter 16 and the movable reflection body 210, light emitted from the second light-emitting element 12 passes through the beam splitter 16 and is reflected by the movable reflection body 210. The light reflected by the movable reflection body 210 is reflected or scattered by an object, which is not shown in the drawing, present outside the optical device 10.

The second light-receiving element 14 is, for example, an avalanche photodiode (APD). As indicated by a solid-line arrow extending to the second light-receiving element 14 through the optical device 10 and the beam splitter 16, the second light-receiving element 14 is emitted from the second light-emitting element 12 and reflected by the movable reflection body 210, and thus, the reflected or scattered light is received by an object, which is not shown in the drawing, present outside the optical device 10. In Examples, the light received by the second light-receiving element 14 is reflected or scattered by the object, is reflected by the movable reflection body 210 and the beam splitter 16 to reach the second light-receiving element 14.

The structure of the sensor device 20 is not limited to the structure according to Examples. For example, in Examples, the optical axis of the light, which is reflected by the movable reflection body 210 and with which the object present outside the optical device 10 is irradiated matches the optical axis of the light reflected or scattered by the object. However, the optical axis of the light which is reflected by the movable reflection body 210 and with which the object present outside the optical device 10 and the optical axis of the light reflected or scattered by the object is irradiated may be shifted from each other. In this case, the light reflected or scattered by the object reaches the second light-receiving element 14 without being reflected at the movable reflection body 210.

Hitherto, the embodiment and examples of the present invention have been described above with reference to the drawings, but these are examples of the present invention, and various configurations other than the above description can be adopted.

For example, in an embodiment, as shown in Fig. 6, in a state where the swing angle around the pair of first torsion bars 230 of the movable reflection body 210 is 0°, the center of the light-receiving area 410 in the first direction X and the second direction Y, and a periphery of the center are irradiated with the light L. However, in a state where the swing angle around the pair of first torsion bars 230 of the movable reflection body 210 is 0°, a position shifted from the center of the light-receiving area 410 in the first direction X and the second direction Y, and a periphery of the position are irradiated with the light L. Even in this case, the swing angle around the pair of first torsion bars 230 of the movable reflection body 210 can be estimated with reference to the first tilt error rate RX and the second tilt error rate RY.

In addition, in an embodiment, the first light-receiving element 400 is a four-segment PD. However, in a case where the movable reflection body 210 rotates around only a single rotation axis, the first light-receiving element 400 may be a two-segment PD. In this example, the light-receiving area 410 has two light-receiving areas segmented in the moving direction of the spot generated in the light-receiving area 410 by the light emitted from the first light-emitting element 300. In a case where the movable reflection body 210 rotates about only a single rotation axis, measurement of the tilt error rate can be made easier by a configuration in which only two segmented light-receiving areas are provided rather than a configuration in which four segmented light-receiving areas are provided.

REFERENCE SIGNS LIST

    10 optical device
    12 second light-emitting element
    14 second light-receiving element
    16 beam splitter
    20 sensor device
    100 housing body
    102 base
    104 lid
    110 light-shielding body
    112 aperture
    114 narrow hole
    116 wide hole
    150 opening
    200 optical scanning device
    210 movable reflection body
    212 movable support table
    212a first metal body
    212b second metal body
    212c resin part
    214 reflection body
    216 first permanent magnet
    220 first frame body
    222 first metal frame body
    222a first split part
    224 first resin body
    226 second permanent magnet
    230 first torsion bar
    232 first metal bar
    234 second metal bar
    240 second frame body
    242 second metal frame body
    242a second split part
    244 second resin body
    250 second torsion bar
    252 third metal bar
    254 fourth metal bar
    262 first terminal
    264 second terminal
    300 first light-emitting element

400 first light-receiving element
410 light-receiving area
412 first light-receiving area
414 second light-receiving area
416 third light-receiving area
418 fourth light-receiving area
500 flexible substrate
610 first magnetic circuit
612 first coil
614 first yoke
616 second yoke
620 second magnetic circuit
622 second coil
630 heat sink
C center line
L light
PL passing light
R1 first reference line
R2 second reference line
X first direction
Y second direction
Z third direction

## Claims

1. An optical device comprising:

   a movable reflection body;
   a first light-emitting element attached to the movable reflection body;
   an aperture through which at least a portion of light emitted from the first light-emitting element passes; and
   a first light-receiving element that receives the light having passed through the aperture.

2. The optical device according to Claim 1, wherein a light-shielding body that defines the aperture shields a portion of the light emitted from the first light-emitting element.

3. The optical device according to Claim 1 or 2, wherein the first light-receiving element has a plurality of light-receiving areas segmented in a moving direction of a spot generated in the first light-receiving element by the light.

4. The optical device according to any one of Claims 1 to 3, wherein an opening area of at least a portion of the aperture on a side where the first light-receiving element is positioned is larger than an opening area of at least a portion of the aperture on a side where the first light-emitting element is positioned.

5. The optical device according to any one of Claims 1 to 4, wherein a spot generated in the first light-receiving element by the light is smaller than a light-receiving area of the first light-receiving element.

6. A sensor device comprising:

   the optical device according to any one of Claims 1 to 5;
   a second light-emitting element; and
   a second light-receiving element that receives light emitted from the second light-emitting element, reflected by the movable reflection body, and reflected or scattered by an object present outside the optical device.

FIG. 1

FIG. 2

EP 4 455 758 A1

13

FIG. 3

FIG. 4

B-B (10)

FIG. 5                                                    C－C(10)

FIG. 6

FIG. 7

FIG. 8

<u>20</u>

10,210

14

16

SECOND LIGHT-
RECEIVING ELEMENT

SECOND LIGHT-
EMITTING ELEMENT

12

# EP 4 455 758 A1

<table>
<tr><td colspan="2" align="center"><b>INTERNATIONAL SEARCH REPORT</b></td><td>International application No.<br><br><b>PCT/JP2021/047926</b></td></tr>
</table>

**A. CLASSIFICATION OF SUBJECT MATTER**

*G02B 26/10*(2006.01)i; *G01S 7/481*(2006.01)i; *G01S 17/02*(2020.01)i; *G02B 26/08*(2006.01)i
FI: G02B26/10 104Z; G02B26/08 E; G01S7/481 A; G01S17/02

According to International Patent Classification (IPC) or to both national classification and IPC

**B. FIELDS SEARCHED**

Minimum documentation searched (classification system followed by classification symbols)

G02B26/10; G01S7/481; G01S17/02; G02B26/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2004-170499 A (OLYMPUS CORP) 17 June 2004 (2004-06-17)<br>    paragraphs [0024]-[0053], fig. 1-15 | 1-3, 5-6 |
| A | | 4 |
| Y | JP 7-128602 A (OMRON CORP) 19 May 1995 (1995-05-19)<br>    paragraphs [0023]-[0027], [0037], fig. 3-4, 12 | 1-3, 5-6 |
| A | | 4 |
| A | JP 2004-144926 A (OLYMPUS CORP) 20 May 2004 (2004-05-20)<br>    paragraphs [0086]-[0087], fig. 16 | 1-6 |
| A | US 2004/0119002 A1 (BUSH, Craig P.) 24 June 2004 (2004-06-24)<br>    entire text, all drawings | 1-6 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **07 March 2022** | **22 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/047926**

| Patent document cited in search report | | | Publication date (day/month/year) | Patent family member(s) | Publication date (day/month/year) |
|---|---|---|---|---|---|
| JP | 2004-170499 | A | 17 June 2004 | (Family: none) | |
| JP | 7-128602 | A | 19 May 1995 | (Family: none) | |
| JP | 2004-144926 | A | 20 May 2004 | (Family: none) | |
| US | 2004/0119002 | A1 | 24 June 2004 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014056211 A